Europäisches Patentamt

(19) European Patent Office

Office européen des brevets

(11) EP 0 800 147 A2

## (12) EUROPEAN PATENT APPLICATION

(43) Date of publication:
08.10.1997 Bulletin 1997/41

(51) Int. Cl.$^6$: **G06K 9/62**, G06K 9/36

(21) Application number: 97302277.5

(22) Date of filing: 03.04.1997

(84) Designated Contracting States:
DE FR

(30) Priority: 05.04.1996 US 14948

(71) Applicant: **LUCENT TECHNOLOGIES INC.**
**Murray Hill, New Jersey 07974-0636 (US)**

(72) Inventors:
• **Baird, Henry Spalding**
**Maplewood, New Jersey 07040 (US)**

• **Hobby, John D.**
**Piscataway, New Jersey 08854 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

### (54) Degraded character image restoration

(57) The present invention provides a method useful in image recognition by employing the restoration of degraded images to produce an approximation of the original ideal artwork for the image. That is, pursuant to the invention, a set of images is read from an image source and an attempt is made to recover, or closely approximate, the ideal artwork (e.g., original symbol) from which the images were derived. The approximation of the original symbol then serves to train an image classifier thereby increasing the effectiveness of the classifier. For example, the classifier can use the original symbol approximations as input to a degradation model to produce a set of degraded images useful in document classification. Thus, the effectiveness of the classifier is enhanced through the reduction in the classification error rate.

FIG. 3

POSTPROCESS (SMOOTH AND SHARPEN CORNERS)

SUPERIMPOSE, ADD UP AND THRESHOLD

PREPROCESS (SMOOTH AND ADD GRAY)

## Description

### Cross Reference to Provisional Application

This application claims the benefit of U.S. Provisional Application No. 60/014,948, filed on April 5, 1996.

### Field of the Invention

The present invention relates to document image processing, and more particularly, to recognizing images from an image source, for example, a printed document.

### Background of the Invention

A fundamental problem in the art of automatic document image processing relates to image defects, that is, imperfections in the image as compared to the original ideal artwork used to create the image. The sources of image defects are numerous and well known. For example, the original printed document (e.g., paper document) which was the source of the image may be defective (e.g., the paper has spots of dirt, folds, or was printed from a faulty printing device). Further, when the paper document was scanned, the paper may have been skewed while being placed in the scanner, resulting in a distortion of the image. In addition, the optics of the scanning process itself can produce defects due to, for example, vibration, pixel sensor sensitivity or noise.

The above-mentioned image defects are a particular problem in document image processing because of the character recognition accuracy required in the automatic processing of documents. For example, optical character recognition (OCR) is often an integral part of an image processing system. OCR is the process of transforming a graphical bit image of a page of textual information into a text file which can be later edited, for example, using word processing software. As is well known in the art, image classifiers are key components of most OCR systems used for analyzing a digital representation of an image. The accuracy of such OCR system classifiers significantly decreases when the quality of the input image is degraded even slightly. Thus, a critical feature of image classifiers is the ability to operate accurately on and recognize the characters in poor representations of the image.

One known technique for improving the image classifiers' ability to handle defective image representations is through so called training. For example, automatic training is frequently employed in which certain recognition algorithms are used to train the classifier to recognize defective images. One approach of such training is to use document-image degradation models. A variety of document-image degradation models and their applications were investigated and discussed in H. Baird, "Document Image Defect Models and Their Uses", *Proc., IAPR 2nd International Conference on Document Analysis and Recognition*, October 20-22, 1993.

These document-image degradation models read a single ideal prototype image (e.g., a machine-printed symbol) and as prescribed by the particular model's degradation algorithm, generate a large number of pseudorandomly degraded images. These generated degraded images (i.e., examples of potential representations of defective symbols in an image) are then used to train the classifier for use in the image recognition process to recognize defective symbols. Of course, this technique requires that an image degradation model (i.e., a prediction of how the original image will degrade) is known in order to generate the degraded images for the classifier.

Another well known image processing technique is image deconvolution which addresses the recovery of an input image from a blurred output image (e.g., a motion-blurred photograph of a moving object). See, for example, Y. Vardi et al., "From Image Deblurring to Optimal Investments: Maximum Likelihood Solutions for Positive Linear Inverse Problems", *Journal of the Royal Statistical Society*, Series B, 55, No.3, pp. 569-612, 1993, and D. Lee et al., "Experiments with Maximum Likelihood Method for Image Motion Deblurring", *Advances in Applied Statistics*, Volume II, pp. 355-383, Abington, Carfax Pub. Co., 1994. Two fundamentals of classical image deconvolution techniques are the prior knowledge of certain distortion processes (i.e., the ways in which patterns are known to distort) and the operation on a single image. However, numerous image recognition cases exist wherein such distortion processes are unknown or where multiple images are involved.

Therefore, a need exists for a technique for the recognition of degraded or defective images which is effective with multiple input images and where the parameters of an image degradation model or image distortion processes are unknown.

### Summary of the Invention

The present invention provides a method useful in image recognition by employing the restoration of degraded images to produce an approximation of the original ideal artwork for the degraded image. In actuality, the classic prior art image degradation approach is reversed. That is, pursuant to the invention, a set of images (e.g., defective or degraded images) is read from a image source and an attempt is made to recover, or closely approximate, the ideal artwork (i.e., original) from which the images were derived. The ideal artwork is, for example, the original symbol used in the creation of the image source (e.g., printed document). The approximation of the original symbol then serves as input to train an image classifier thereby increasing the effectiveness of the classifier. For example, the classifier can use the original symbol approximations as input to a degradation model to produce a set of degraded images useful in document classification. Thus, the effectiveness of the classifier is enhanced through the reduction in the classification error rate.

In accordance with the preferred embodiment of the invention, a set of degraded bilevel images of single unknown characters is selected from an image source (e.g., printed document). The selected bilevel images are preprocessed by smoothing and adding gray level. Image averaging is then applied to the gray level images. More particularly, the resultant gray level images are superimposed, intensities are added, and the result is thresholded to produce a single bilevel image. Thereafter, a smoothing of the single bilevel image is made to provide the final output of an approximation of the image's original symbol (i.e., the original symbol used in the creation of the image source). As described above, the original artwork approximation can serve, for example, as input to an image classifier and is useful in the further image classification and recognition of the image source.

Further embodiments of the invention, include additional processing of the input images to account for sharp corners of the input images thereby further increasing the effective approximation of the original artwork.

## Brief Description of the Drawings

FIG. 1 shows an OCR system employing the image restoration process of the present invention;
FIG. 2 is a flowchart of the preferred embodiment of the image restoration process of the present invention;
FIG. 3 is an illustrative example of applying the process of FIG. 2 to a sample of input images;
FIG. 4 is a example of a smooth-shaded image section produced by an illustrative smoothing operation of FIG. 2;
FIG. 5 shows a magnified portion of the entire text used as input for testing the process of the present invention;
FIG. 6 shows a particular set of magnified images selected from the entire input text of FIG. 5;
FIG. 7 shows ideal artwork image approximations generated in accordance with the present invention; and
FIG. 8 shows samples of degraded images produced using the ideal artwork image approximations of FIG. 7.

## Detailed Description of the Invention

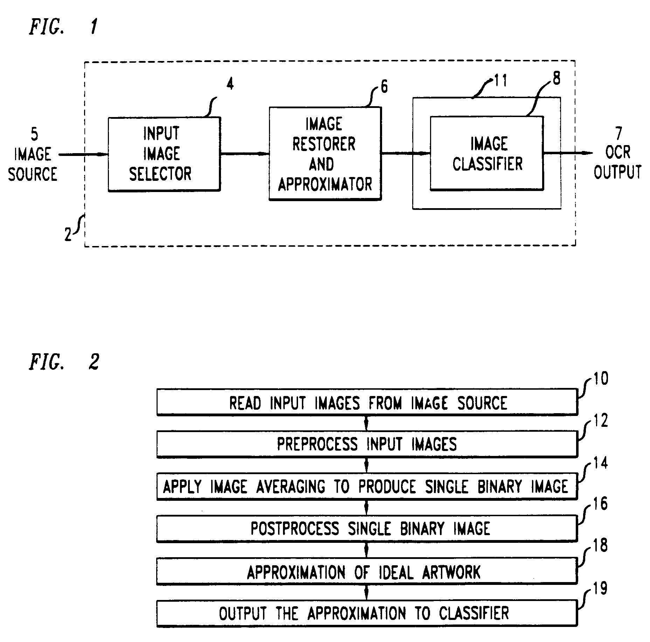

The present invention provides a method useful in image recognition by employing the restoration of degraded images to produce an approximation of the original ideal artwork for the image. That is, pursuant to the invention, a set of images (e.g., defective images) is read from an image source and an attempt is made to recover, or closely approximate, the ideal artwork (e.g., original symbol) from which the images were derived. Advantageously, this approximation of the original symbol can serve to train an image classifier thereby increasing the effectiveness of the classifier. For example, the classifier can use the original symbol approximations as input to a degradation model to produce a set of degraded images useful in document classification. FIG. 1 shows an OCR system employing the principles of the invention. In particular, OCR system 2 has an input image selector 4 which is used to select an input set of images, illustratively a set of printed characters, from image source 5. The input set of images serve as input to image restorer and approximator 6 which produces an approximation of the ideal artwork for the input images. Image classifier 8, illustratively shown as part of OCR engine 11, uses the ideal artwork approximations to classify the original image source. The classifications made by image classifier 8 are then used by OCR engine 11 which applies well known image recognition principles to image source 5 to produce well known OCR system output 7.

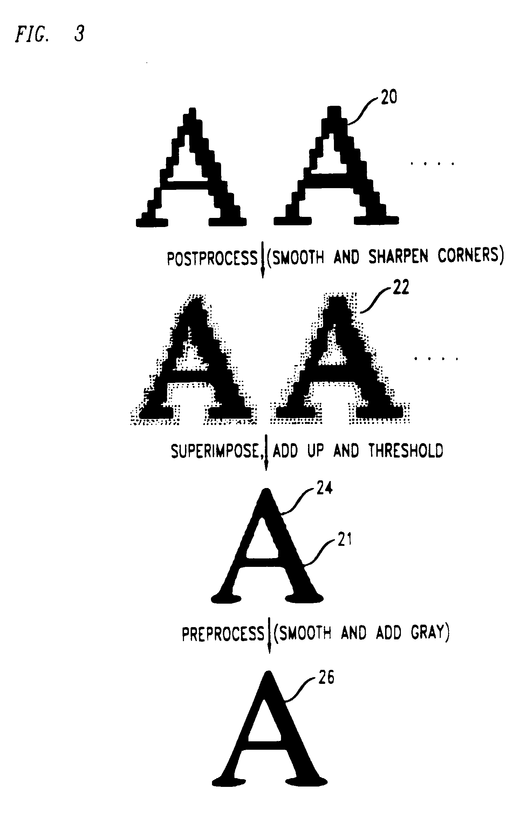

FIG. 2 is a flowchart of the main operations of the preferred embodiment of the present invention. FIG. 3 is an illustrative example of applying the process of FIG. 2 to a sample set of input images. These two figures will be discussed further below in tandem to facilitate the discussion of the invention.

Therefore, turning our attention to FIG. 2 and FIG. 3, a set of input images are illustratively read from an image source (block 10), for example, a page of characters from a printed document. Advantageously, the method of the present invention operates on many input images as opposed to a single image as in, for example, prior art image deconvolution techniques. In accordance with the preferred embodiment, the selected input images are bilevel (i.e., black or white, not gray or color) and may be read from the image source by well known techniques such as page layout analysis or manual selection. Further, the set of input images represent images from the source which an OCR system (e.g., OCR system 2 shown in FIG. 1) would have difficulty in performing recognition on due to their defects and degradation. In accordance with the embodiment the set of degraded input images is collected in such a manner so that the set captures those images from the source thought to be representative of a single symbol (i.e., the same symbol). For example, FIG. 3 shows a illustrative input character set 20 representative of the printed character "A".

Significantly, by applying certain preprocessing to the set of input images, we have achieved much improved image recognition as will be seen below. In accordance with the invention, the set of input images undergoes preprocessing (block 12) prior to the application of the so called "image averaging" operations of our method as will be further discussed below. We have found the preferred preprocessing operations to include, at a minimum, smoothing the input images and adding gray level to the smoothed images. In accordance with the preferred embodiment of the invention, we have discovered that using a smoothing outline technique provides superior results.

More particularly, the preferred embodiment employs the smoothing outline technique described in J. D. Hobby, "Polygonal Approximation that Minimize the Number of Inflection", *Proceedings of the Fourth Annual ACM-SIAM Symposium on Discrete Algorithms*, pp. 93-102, January, 1993 (hereinafter "Hobby's smoothing algorithm"). Advantageously, by applying Hobby's smoothing algorithm during the preprocessing operations (block 12), a range of alternative outlines for a particular input is generated. The range of alternative outlines provide an improved estimate of the underlying shape of the input image, thereby increasing the recognition effectiveness of the preferred embodiment. Further, we have found that implementing Hobby's smoothing algorithm with an error tolerance of $\varepsilon = 1/3$ provides improved smoothing results in preprocessing the set of input images in accordance with the invention.

In addition to the above-described smoothing operation, the preprocessing of the input images (block 12) also preferably includes the addition of gray scale to the resultant smoothed images to produce a set of gray level images for further processing. The gray scale is added at varying levels to take full advantage of the range of outlines generated by Hobby's smoothing algorithm. Applying the preprocessing operations (block 12) to the illustrative input character set 20 results in gray level images 22 shown in FIG. 3.

Upon completion of the preprocessing operations (block 12), the gray level images 22, in accordance with the preferred embodiment, undergo a series of operations herein described collectively as "image averaging" (block 14). Image averaging includes the application of three main operations: (1) superimposing the inputs; (2) adding-up the inputs; and (3) thresholding. The gray level images 22 produced by preprocessing are superimposed using any of a number of well known techniques. Illustratively, the preferred embodiment superimposes the images by finding the centroid of each input image, to subpixel accuracy, and shifting the images so that all the centroids coincide.

After superimposing the gray level images 22, the images are added together to produce a single gray level image having a cumulative gray scale value. In accordance with the preferred embodiment, the image averaging operations of adding-up the inputs and thresholding are carried out as follows:

(1) Initialize $j \leftarrow 1$.

(2) Apply Hobby's smoothing algorithm to the j-th outline, obtaining $P_{iL} = (X_{iL}, Y_{iL})$ and $P_{ir} = (X_{iR}, Y_{iR})$ for $i = 0, 1, 2 .... n_j$.

(3) Let $\overline{P}_{iL} = \sigma P_{iL}$ and $\overline{P}_{iR} = \sigma P_{iR}$ for each i. The scale factor sigma is used to control the resolution of the output from the image averaging (e.g., larger sigma values produce increased resolution of the output). Then initialize $i \leftarrow 1$.

(4) Find all integers $\overline{y}$ such that the trapezoid $\overline{P}_{i-1,R}\overline{P}_{iR}\overline{P}_{iL}\overline{P}_{i-1,L}$ intersects the line $y = \overline{y}$ and execute step (5) for each pair of intersection points $(x', \overline{y})$ and $(x'', \overline{y})$.

(5) Compute darkness values d' and d'' for $(x', \overline{y})$ and $(x''\overline{y})$ by letting the darkness be 1 at $\overline{P}_{i-1,L}$ and $\overline{P}_{iL}$, 0 at $\overline{P}_{i-1,R}$ and $\overline{P}_{iR}$, and varying linearly in between. Then store the triples:

$$\left( x', \overline{y}, \frac{d'' - d'}{|x'' - x'|} \right) \quad \text{and} \quad \left( x'', \overline{y}, \frac{d' - d''}{|x'' - x'|} \right).$$

(6) If $i < n_j$, increment i and go back to step (4).

(7) If there are more outlines, increment j and go back to step (2).

(8) For each $\overline{y}$ such that there are triples with $y = \overline{y}$, sort the triples by x and scan them in order, maintaining total darkness D and rate of change of darkness $\Delta D$. Each time the total darkness crosses the threshold T, where T is a preselected level of darkness threshold (e.g., a certain gray level), output the point $(x, \overline{y})$ for each such occurrence.

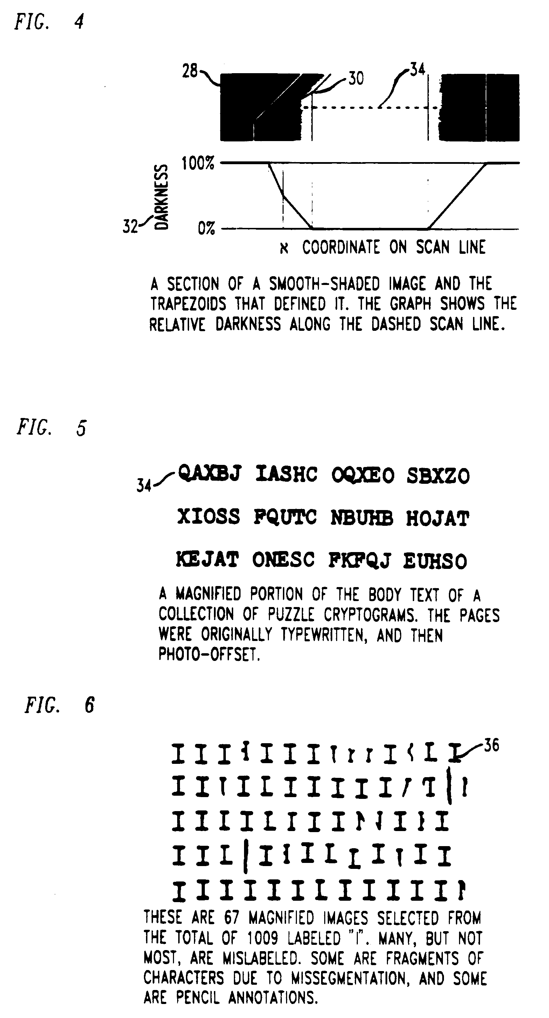

Basically, the above-described operations rasterize each polygonal outline as generated by the smoothing algorithm, add up the resultant images, and threshold the result to produce a thresholded image 24 (see, FIG. 3). More particularly, in accordance with the preferred embodiment, in order to make use of the smooth-shaded edges generated by Hobby's smoothing algorithm, a generalization is made by rasterizing the images at a higher resolution and adding up the rasterizations. For example, consider a horizontal scan line passing through an image (having smooth-shaded edges). The associated darkness is a piecewise-linear function of the x coordinate along the scan line and the slope discontinues at points where the scan line crosses trapezoid boundaries. For example, FIG. 4 shows a section of a smooth-shaded image 28, the trapezoids that define it 30, and the relative darkness 32 along the dashed scan line 34.

In accordance with the preferred embodiment, the trapezoids are rasterized to (x, y, d) triples (see, step (5) above) such that the darkness values represent changes in the slope of the darkness function as opposed to changes in the darkness itself. The total darkness function for the (x, y, d) triples is recreated on particular scan lines (see, step (8) above). Further, in order to avoid accumulating errors in $\Delta D$ (see, step (8) above) the third component of each triple is stored as a fixed-point number. However, some accumulated error may result in the total darkness D, but this error is partially mitigated when the trapezoids generated (see, step (8) above) have a large horizontal extent. This is due to the fact that trapezoids having a large horizontal extent are known to more likely have a rate of change of darkness $\Delta D$ equal to zero. Such a case results in $d'=d''$ in the tuples generated in step (5) of the add-up and threshold operations.

We have further realized that applying further postprocessing to the thresholded image 24 generated by the above-described image averaging operations produces an improved image restoration output 26. As explained previously, the image restoration output 26 is an approximation of the ideal symbol used in the creation of the original images of the image source. In accordance with the invention, the thresholded image is further postprocessed (see, FIG. 2, block 16) using an additional smoothing operation. The postprocessing smoothing is again illustratively performed in accordance with the previously discussed smoothing technique as described by J. D. Hobby. Advantageously, by applying Hobby's smoothing algorithm during postprocessing operations (block 16) a more realistic image restoration output 26 is produced without any influences from underlying image wiggle or noise. For example, with reference to FIG. 3, one can see that the wobble 21 of thresholded image 24 has been removed by the postprocessing operations as evidenced in image restoration output 26. Further, in accordance with this illustrative embodiment, the tolerance $\varepsilon$ used in the postprocessing smoothing is a function of the scale factor $\sigma$ and the total number of images averaged together.

Further embodiments of the invention account for the production of "rounded" corners which are well known in the image processing art. In certain instances, such rounded corners may introduce certain inaccuracies, for example, where the underlying shape has so called "sharp corners". Sharp corners and their related affects are more fully discussed in J.D. Hobby et al., "Degraded Character Image Restoration", *Proceedings of the Fifth Annual Symposium on Document Analysis and Image Retrieval*, pp. 233-245, 1996. We have realized that sharp corners may be addressed in further embodiments of the invention by adding $\gamma$ units of area per radian in accordance with the following operations:

(9) Let $\gamma' = \gamma/20$. Repeat steps 10-14 at least 20 times.
(10) For each polygon edge, compute a shift amount $s_i = \gamma'(\theta_i + \Phi_i)/(2l_i)$, where $l_i$ is the length of the edge and $\theta_i$ and $\Phi_i$ are the angles at the surrounding vertices.
(11) For each edge, find the line $\ell_i$ obtained by shifting the edge perpendicularly $s_i$ units to its right.
(12) For each vertex $v_i$, find the point $v'_i$ where the $\ell_i$ and $\ell_j$ for the edges incident on $v_i$ intersect. This forms a new polygon whose edges are parallel to those of the old polygon.
(13) For each edge of the new polygon whose orientation is opposite that of the corresponding old polygon edge, collapse the edge to a point where the $\ell_i$ and $\ell_j$ for the surrounding edges intersect.
(14) Repeat step 13 until all the edge orientations agree and thereafter update the old polygon to equal the new polygon.

Thus, postprocessing to account for the sharp corners further improves the approximation of the ideal artwork of the original image as produced in accordance with the invention.

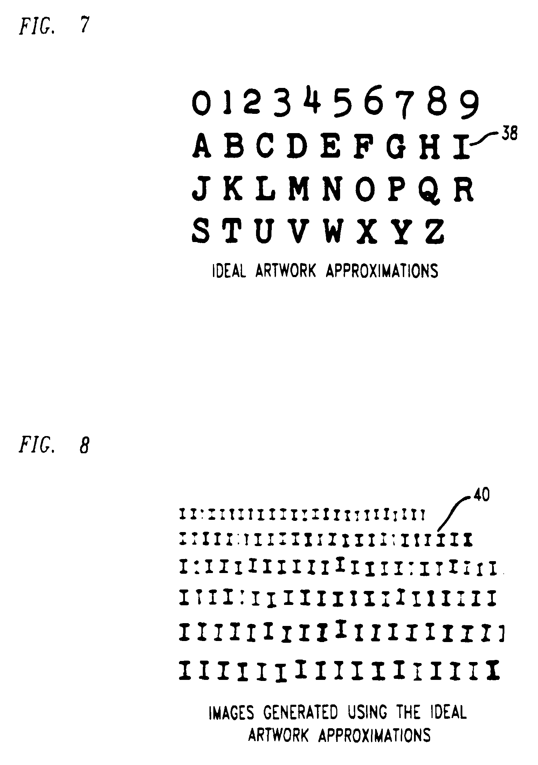

An actual application, in an OCR context, of the present invention will now be discussed to further illustrate the advantages of the invention. We selected as input a body of text (taken from a collection of 50 puzzle cryptograms) believed to by originally typewritten and subsequently photo-offset. To further make the OCR test meaningful, the selected input text was of variable quality and contained a significant amount of poor quality text. The input text included 23,684 characters including word-spaces. A magnified portion of the input text 34 is shown in FIG. 5. We processed the entire input text in two phases. The first phase image processing did not include any of the principles of the present invention.

In the first phase, we employed an experimental page reader using a classifier trained on twenty fixed-pitch faces. Additional attributes of the first phase image processing, each of which will be fully understood by one skilled in the art, included: page layout, fixed-pitch processing, character classification, shape-directed segmentation and crude contextual filtering. The "classification error" was measured in the first phase by semi-manually identifying every pair of strings of characters (T, E) where T is from the ground truth and E is the string erroneously substituted for T by the page reader. T or E may include spaces and may be empty. Each (T, E) pair was locally minimal in that T and E shared no character. We further adopted a overall policy that each pair contributes to the error count a score that is equal to the maximum of the lengths of T and E, unless that number exceeds 10, in which case it is ignored (i.e., forced to zero). The basis for this adopted policy stems from the assumption that the (T, E) pairs result from a layout, rather than a classification mistake.

The above-described image processing used in the first phase resulted in 1706 total classification errors which represented a nominal error rate of 7.2% of the characters. These first phase results will be used for comparison to that of the image restoration and recognition principles of the present invention as discussed below.

In the second phase, we attempted to improve upon the error rate results of the first phase by applying the operations of the present invention as previously described in detail. We sorted the input character images (the same set used as input in phase 1) by their top-choice character label. As will be appreciated by those skilled in the art, the top-choice label is the most likely interpretation of the input character image in terms, for example, of percentage (e.g., 90% likely the image is the character "I"). By way of example, FIG. 6 shows a set of magnified images 36 selected by their top-choice labels from a total of 1009 labeled as the character "I". As is apparent from FIG. 6, some of the images are mislabeled (i.e., not the character "I") or are fragments of characters. Next, for each character label, all of that label's images were processed in accordance with principles of the present invention. The resultant output of applying the invention resulted in a body of symbols which consisted of upper case alphabetics and numerals. The output character images 38 generated by our inventive technique is shown in FIG. 7. As discussed previously, the output character images 38 are an approximation and representation of the ideal artwork, e.g., symbols, from which the original input text was created.

Advantageously, the output character images 38 generated by the invention can be used as the input to a pseudorandom generator for producing a set of degraded images representative of how the input text may appear from a classification standpoint. In particular, using each symbol of the "ideal artwork" set, we generated a set of degraded images (150 for each input character image). By way of example, using the generated ideal symbol approximation of the character "I" (shown in FIG. 7) we produced degraded images 40 shown in FIG. 8 which are representative of the potential degradation patterns of this character.

The entire set of representative degraded images generated using the ideal artwork approximations were used to train a classifier which was then used to classify the input text of the image source. Significantly, the result of applying the invention produced a 20% reduction in the classification error rate, to 1376 total errors, which represented a nominal classification error rate of 5.8%.

The foregoing merely illustrates the principles of the present invention. Those skilled in the art will be able to devise numerous arrangements which, although not explicitly shown or described herein, embody those principles and are within their spirit and scope.

## Claims

1. A method for use in image recognition, the method comprising the steps of:

   selecting particular images of a plurality of images from an image source (for example a printed document) each of the particular images selected on the basis of being derived from a same original symbol;
   generating an approximation of the original symbol from the selected particular images; and
   providing the approximation of the original symbol to an image classifier for classifying the plurality of images of the image source.

2. A method for use in image recognition, the method comprising the steps of:

   selecting a plurality of images from an image source (for example a printed document)
   generating a plurality of smoothed images by applying a first smoothing to the plurality of selected images;
   generating a plurality of gray scale images from the plurality of smoothed images;
   generating a single image from the plurality of gray scale images;
   applying a second smoothing to the single image to produce an approximation of an original symbol used in the creation of the image source; and
   providing the approximation of the original symbol to an image classifier for classsifying the plurality of images.

3. A method of training an image classifier, the method comprising the steps of:

   generating a plurality of smoothed images by applying a first smoothing to a plurality of selected images:
   generating a plurality of gray scale images from the plurality of smoothed images;
   generating a single image from the plurality of gray scale images;
   applying a second smoothing to the single image to produce an approximation of an original symbol, the original symbol being representative of an image from which the plurality of selected images were derived; and
   using the approximation of the original symbol in the image classifier to clasify a plurality of defective images from an image source.

4. An image recognition method which employs an approximation of an original symbol, the original symbol being a symbol from which at least one of a plurality of degraded images is derived, the method comprising the steps of:

   generating a plurality of smoothed images by applying a first smoothing to particular ones of the plurality of degraded images;

generating a plurality of gray scale images from the plurality of smoothed images;

generating a single image from the plurality of gray scale images:

applying a second smoothing to the single image to produce the approximation of the original symbol; and

providing the approximation of the original symbol to an image classifier for classifying the plurality of degraded images.

5. A method for classifying a plurality of characters contained within a document, the method comprising the steps of:

selecting particular ones of the characters, each of the particular ones of the characters selected on the basis as being derived from a same original symbol;

generating an approximation of the original symbol from the particular ones of the characters; and

providing the approximation of the original symbol to an image classifier for classifying the plurality of characters.

6. An optical character recognition system comprising:

a selector for selecting a plurality of defective images from an image source, each of the defective images selected on the basis as being derived from a same original symbol;

an image approximation generator for generating an approximation of the original symbol; and

an image classifier which uses the approximation of the original symbol to classify the plurality of defective images.

7. The method of any one of claims 1 to 5, or the system of claim 6, wherein the generating the approximation step further comprises the steps of:

generating a plurality of smoothed images or characters by applying a first smoothing to the particular selected images:

generating a plurality of gray scale images from the plurality of smoothed images:

generating a single image from the plurality of gray scale images: and

applying a second smoothing to the single image.

8. The method of claim 7 wherein the generating a single image or character step further includes the steps of:

superimposing the plurality of gray scale images;

adding the superimposed gray scale images together: and

thresholding the result of the adding step as a function of a darkness level.

9. The method or system of claim 1 to 7 wherein the second smoothing includes the further step of adding varying amounts of units of area per radian to the single image.

10. The method or system of claim 1 to 7 wherein the first and the second smoothing employ outline smoothing.

11. The method of claim 1 wherein the providing the approximation step includes the further step of generating a plurality of degraded images in the image classifier using the approximation of the original symbol.

12. The method of claim 2, wherein the generating the plurality of gray scale images step adds gray scale at varying degrees to the plurality of smoothed images.

13. The method of claim 7 wherein the superimposing step includes the steps of:

locating a centroid of each of the gray scale images; and

shifting the gray scale images so that their centroids coincide.

14. The method of claim 2 or 10, wherein the generating a single image step applies a scale factor for controlling the resolution of the single image.

15. The method of claim 3, wherein the classifying step further includes the step of generating a plurality of degraded images using the approximation of the original symbol.

**16.** The system of claim 6, wherein the image approximation generator further comprises:

a first processor for generating a plurality of smoothed images;
a gray scale image generator for generating a plurality of gray scale images from the plurality of smoothed images; and
a second processor for generating a single image from the gray scale images and for applying a second smoothing to the single image.

**17.** The apparatus of claim 6 wherein the image classifier generates a plurality of degraded images using the approximation of the original symbol.

FIG. 1

FIG. 2

*FIG. 3*

POSTPROCESS (SMOOTH AND SHARPEN CORNERS)

SUPERIMPOSE, ADD UP AND THRESHOLD

PREPROCESS (SMOOTH AND ADD GRAY)

FIG. 4

A SECTION OF A SMOOTH-SHADED IMAGE AND THE
TRAPEZOIDS THAT DEFINED IT. THE GRAPH SHOWS THE
RELATIVE DARKNESS ALONG THE DASHED SCAN LINE.

FIG. 5

A MAGNIFIED PORTION OF THE BODY TEXT OF A
COLLECTION OF PUZZLE CRYPTOGRAMS. THE PAGES
WERE ORIGINALLY TYPEWRITTEN, AND THEN
PHOTO-OFFSET.

FIG. 6

THESE ARE 67 MAGNIFIED IMAGES SELECTED FROM
THE TOTAL OF 1009 LABELED "I". MANY, BUT NOT
MOST, ARE MISLABELED. SOME ARE FRAGMENTS OF
CHARACTERS DUE TO MISSEGMENTATION, AND SOME
ARE PENCIL ANNOTATIONS.

FIG. 7

0123456789
ABCDEFGHI ⟋38
JKLMNOPQR
STUVWXYZ

IDEAL ARTWORK APPROXIMATIONS

FIG. 8

⟋40
II:IIIIIIIII:IIII:IIIi:III
IIIII:IIIIIIIIIIIIII:IIIIII
I:IIIIIIIIIIIIIII:IIIiII
IIII:IIIIIIIIII:IIIIIII
IIIIIIIIIIIIIIIIIIIIII
IIIIIIIIIIIIIIIIIIIII

IMAGES GENERATED USING THE IDEAL
ARTWORK APPROXIMATIONS